# DEMANDE DE BREVET EUROPEEN

(11) **EP 3 588 293 A2**
(43) Date de publication de la demande: **01.01.2020**
(21) Numéro de dépôt: 19181840.0
(22) Date de dépôt: 21.06.2019
(51) Int. Cl.: G06F 9/50, G06F 3/06, G06F 11/14, G06F 11/20

(54) **PROCÉDÉ DE GESTION DE PANNE DANS UN RÉSEAU DE NOEUDS BASÉ SUR UNE STRATÉGIE LOCALE**

(30) Priorité: 22.06.2018 FR 1855559
(71) Demandeur: Bull SAS, 78340 Les Clayes-sous-Bois (FR)
(72) Inventeur: LEPOUTERE, Guillaume, 38000 Grenoble (FR); BRELLE, Emmanuel, 38000 Grenoble (FR); GERMAIN, Florent, 38800 Le Pont de Claix (FR); LESNICKI, Piotr, 38100 Grenoble (FR)
(74) Mandataire: Plasseraud IP

(57) **Abrégé**

L'invention concerne un procédé de gestion de panne dans un réseau de noeuds (21-63), comprenant, pour chaque noeud considéré de tout ou partie des noeuds (21-53) du réseau effectuant un même calcul : d'abord, une étape de sauvegarde locale de l'état de ce noeud considéré (21-53), au niveau d'un support de stockage (31-56) de ce noeud considéré (21-53), le lien entre ce support de stockage (31-56) et ce noeud considéré (21-53) pouvant être redirigé de ce support de stockage (31-56) vers un autre noeud (21-63), ensuite, si le noeud considéré est défaillant (21, 42), une étape de récupération de la sauvegarde locale de l'état de ce noeud considéré (21, 42), en redirigeant ledit lien entre le noeud considéré (21, 42) et son support de stockage (31, 45) de manière à relier ledit support de stockage (31, 45) vers un noeud opérationnel (23, 43) différent du noeud considéré (21, 42), ce noeud opérationnel (23, 43) étant déjà en train d'effectuer ledit calcul, les sauvegardes locales de ces noeuds considérés (21-53), utilisées pour les étapes de récupération, sont cohérentes entre elles de sorte à correspondre à un même état de ce calcul, puis, si au moins un noeud considéré est défaillant (21, 42), une étape de renvoi de ladite sauvegarde locale de ce noeud considéré (21, 42) vers un nouveau noeud supplémentaire (61-63) rajouté audit réseau à l'occasion de la défaillance de ce noeud considéré (21, 42).

## Description

### DOMAINE DE L'INVENTION

L'invention concerne le domaine des procédés de gestion de panne dans un réseau de noeuds et le domaine des parties de réseau de noeuds associées à cette gestion de panne.

### CONTEXTE DE L'INVENTION

Dans un réseau de noeuds effectuant un même calcul, des sauvegardes sont effectuées à un ou à plusieurs niveaux, ce sont des sauvegardes multiniveaux. Lorsqu'une panne survient, le calcul peut être récupéré au moins en partie sans devoir être intégralement recommencé, justement grâce aux sauvegardes effectuées. Selon le type de panne survenu, l'un ou l'autre des niveaux de sauvegarde est utilisé pour récupérer le calcul en partie ou même en majorité ou encore presque totalement.

Les applications distribuées peuvent durer beaucoup plus longtemps que la durée moyenne sans panne d'un réseau, encore appelée MTBF d'un cluster (pour « Mean Time Between Failures » en langue anglaise), elles ont donc beaucoup de chances d'être interrompues. Elles n'ont en général pas de solution interne de gestion des pannes, lesquelles peuvent alors entraîner d'abord la perte des données de sauvegarde locales en cas de panne physique du noeud de calcul, ensuite suivie de la perte de l'ensemble de l'avancement du calcul entraînée par la perte d'un seul noeud de calcul mais dont les données locales de sauvegarde ne peuvent plus être récupérées.

Il existe des solutions de sauvegarde et de redémarrage (« checkpoint/restart » en langue anglaise) à partir de sauvegarde permettant aux applications de sauvegarder leur contexte régulièrement sur différents niveaux de sauvegarde, plus ou moins rapides.

Les différents niveaux de sauvegarde vont de la sauvegarde la plus locale à la sauvegarde la plus globale, allant ainsi de la sauvegarde la plus simple et la plus rapide à la sauvegarde la plus complexe, la plus lente et la plus coûteuse, allant également ainsi de la sauvegarde la plus fragile et la plus faible à la sauvegarde la plus robuste et la plus résiliente.

Selon un art antérieur correspondant à la librairie FTI (« interface de tolérance aux pannes » ou bien « fault tolerance interface » en langue anglaise), il est connu quatre niveaux de sauvegarde qui sont :
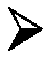 Le premier niveau L1 qui réalise une sauvegarde locale, simple et peu coûteuse, effectuée très souvent, d'où une perte minime en temps de calcul lors d'une panne pouvant être récupérée à ce seul premier niveau L1,
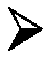 Le deuxième niveau L2 qui réalise une première sauvegarde intermédiaire par duplication sur un noeud partenaire, moins simple et un peu plus coûteuse, d'où une perte plus importante en temps de calcul lors d'une panne ne pouvant être récupérée qu'à ce deuxième niveau L2,
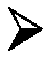 Le troisième niveau L3, qui réalise une deuxième sauvegarde intermédiaire par encodage de type Reed-Solomon, encore moins simple et encore un peu plus coûteuse, d'où une perte encore un peu plus importante en temps de calcul lors d'une panne ne pouvant être récupérée qu'à ce troisième niveau L3,
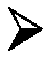 Le quatrième niveau L4, qui réalise une sauvegarde globale à un niveau système de fichier, complexe et assez coûteuse, d'où une perte vraiment importante en temps de calcul lors d'une panne ne pouvant être récupérée qu'à ce quatrième niveau L4.

Du niveau local L1 au niveau global L4, la sauvegarde est de plus en plus robuste et résiliente, mais elle devient également de plus en plus complexe et coûteuse. C'est pour cela, que la sauvegarde du premier niveau L1 est réalisée souvent, la sauvegarde du deuxième niveau L2 un peu moins souvent, la sauvegarde du troisième niveau L3 encore un peu moins souvent, la sauvegarde du quatrième niveau L4 relativement rarement. Par conséquent, statistiquement, lorsqu'une panne survient, le dernier état cohérent qui peut être récupéré est, très récent au premier niveau L1, un peu moins récent au deuxième niveau L2, encore un peu moins récent au troisième niveau L3, plus ancien au quatrième niveau L4. Par conséquent le volume de travail perdu est, très faible au premier niveau L1, relativement limité au deuxième niveau L2, notable au troisième niveau L3, plus important au quatrième niveau L4.

### RESUME DE L'INVENTION

Le but de la présente invention est de fournir un procédé de gestion de panne dans un réseau de noeuds palliant au moins partiellement les inconvénients précités.

Plus particulièrement, l'invention vise à fournir un procédé de gestion de panne dans un réseau de noeuds améliorant le compromis entre efficacité d'une part et coût et complexité d'autre part, pour au moins un niveau de sauvegarde considéré.

Plus particulièrement, l'invention vise à fournir un procédé de gestion de panne dans un réseau de noeuds qui ait une efficacité similaire ou comparable à celle d'une sauvegarde de niveau intermédiaire, préférentiellement celle de la première sauvegarde intermédiaire, avantageusement celle du deuxième niveau L2, pour un coût et une complexité similaires ou comparables à ceux d'une sauvegarde de niveau local, avantageusement ceux du premier niveau L1.

Pour cela, l'invention propose de rendre le lien entre un support de stockage et son noeud redirigeable vers un autre noeud, de manière à pouvoir disposer de la sauvegarde réalisée sur le support de stockage lorsque le noeud est défaillant, éventuellement par le biais d'une copie au niveau d'un noeud voisin, mais sans avoir réalisé de copie de sauvegarde au niveau d'un noeud voisin pour la plupart des noeuds qui ne sont pas défaillants ou pour tous les noeuds qui ne sont pas défaillants. Le lien entre un support de stockage et son noeud n'est pas réalisé directement, mais indirectement au travers d'un élément de réseau apte à reconfigurer ce lien pour rattacher ce support de stockage à un autre noeud lorsque le précédent noeud devient défaillant. Cet élément de réseau relie plusieurs noeuds à leurs supports de stockage respectifs, chaque noeud étant relié à son support de stockage associé (ou éventuellement à ses supports de stockage associés).

En résumé, pour un noeud défaillant, on dispose d'une sauvegarde malgré la défaillance de ce noeud, d'où une efficacité similaire au deuxième niveau L2, mais on ne réalise pas d'opération plus complexe qu'une simple sauvegarde locale pour la plupart ou pour tous les noeuds qui ne sont pas défaillants, ce qui est la majorité ou même la grande majorité des noeuds du réseau effectuant le calcul considéré, d'où un coût et une complexité du moins comparable sinon similaire à ceux du premier niveau L1.

Ainsi, selon des modes de réalisation de l'invention, le coût du deuxième niveau L2 est économisé, alors qu'est conservée la capacité à redémarrer une application à partir des sauvegardes du premier niveau L1 en cas de panne d'un noeud de calcul. La copie vers un noeud voisin traditionnellement effectuée au deuxième niveau L2 n'est ici pas réalisée pendant l'exécution de l'application de manière préventive pour tous les noeuds de calcul, mais seulement en cas de panne et seulement pour les noeuds défaillants après survenue de la panne. La copie est alors faite uniquement pour relancer l'application avec les données manquantes, remontées de la sauvegarde locale.

D'une part, cette sauvegarde de coût et de complexité similaires ou comparables à une sauvegarde locale présente l'efficacité d'une sauvegarde intermédiaire, ce qui améliore beaucoup le rapport qualité prix de cette sauvegarde.

D'autre part, cette sauvegarde de coût et de complexité similaires ou comparables à une sauvegarde locale présentant l'efficacité d'une sauvegarde intermédiaire, permet préférentiellement de remplacer à la fois une sauvegarde locale classique et une ou plusieurs sauvegardes intermédiaires classiques, en ne gardant en plus que la sauvegarde globale en dernier recours, pour gérer les pannes les plus sévères, la plupart des pannes pouvant être maintenant gérées par la sauvegarde locale-intermédiaire proposée par l'invention, celle-ci ayant l'efficacité d'une sauvegarde intermédiaire pratiquement au prix d'une sauvegarde locale.

Cette sauvegarde selon l'invention, à compromis optimisé entre efficacité et complexité, est utilisée selon une stratégie locale. Dans cette stratégie locale, le mécanisme de redirection de lien entre noeud de calcul et mémoire associée est utilisé pour récupérer la sauvegarde d'un noeud défaillant et la rattacher à un nouveau noeud rajouté pour l'occasion, avantageusement au cours de la même tâche, les noeuds non défaillants, et préférentiellement non intégrés à une lame de calcul ayant un noeud défaillant, étant conservés et relancés à partir de leur propre sauvegarde locale.

De cette manière, la conservation des sauvegardes locales pour tous les noeuds non défaillants rend la relance plus simple.

Ainsi, tout risque de complexification par la réalisation d'une relance associée à une sauvegarde globale est évité.

Une stratégie plus globale utiliserait le mécanisme de redirection de lien entre noeud de calcul et mémoire associée pour récupérer la sauvegarde d'un noeud défaillant et l'intégrer à une sauvegarde globale de manière à relancer une nouvelle tâche par le gestionnaire de ressources.

A cette fin, la présente invention propose un procédé de gestion de panne dans un réseau de noeuds, comprenant, pour chaque noeud considéré de tout ou partie des noeuds du réseau effectuant un même calcul : d'abord, une étape de sauvegarde locale de l'état de ce noeud considéré, au niveau d'un support de stockage de ce noeud considéré, le lien entre ce support de stockage et ce noeud considéré pouvant être redirigé de ce support de stockage vers un autre noeud, ensuite, si le noeud considéré est défaillant, une étape de récupération de la sauvegarde locale de l'état de ce noeud considéré, en redirigeant ledit lien entre le noeud considéré et son support de stockage de manière à relier ledit support de stockage vers un noeud opérationnel différent du noeud considéré, ce noeud opérationnel étant déjà en train d'effectuer ledit calcul, les sauvegardes locales de ces noeuds considérés, utilisées pour les étapes de récupération, sont cohérentes entre elles de sorte à correspondre à un même état de ce calcul, puis, si au moins un noeud considéré est défaillant, une étape de renvoi de ladite sauvegarde locale de ce noeud considéré vers un nouveau noeud supplémentaire rajouté audit réseau à l'occasion de la défaillance de ce noeud considéré.

Suivant des modes de réalisation préférés, l'invention comprend une ou plusieurs des caractéristiques suivantes qui peuvent être utilisées séparément ou en combinaison partielle entre elles ou en combinaison totale entre elles, appliquées à l'objet de l'invention précité.

De préférence, dans l'étape de renvoi, toutes les sauvegardes locales des noeuds d'une même lame de calcul que celle du noeud défaillant sont renvoyées vers une nouvelle lame de calcul rajoutée audit réseau à l'occasion de la défaillance du noeud considéré.

Ainsi, d'une part la redirection du lien entre support et noeud peut être effectuée même en cas de panne importante et même relativement généralisée au niveau de toute une lame de calcul, et d'autre part la nouvelle lame de calcul étant pleinement opérationnelle, une nouvelle panne peut arriver ultérieurement au niveau de cette nouvelle lame de calcul et être gérée de façon similaire par le mécanisme préconisé par l'invention, alors que si la même lame de calcul avait été conservée, une nouvelle panne arrivant sur cette même lame de calcul conservée serait devenue plus difficile à gérer.

De préférence, le procédé de gestion de panne comprend, après ladite étape de renvoi, une étape de relance dudit calcul à partir desdites sauvegardes locales, au cours de la même tâche que la tâche au cours de laquelle un noeud est devenu défaillant.

Ainsi, la relance est effectuée encore plus simplement et plus rapidement, la perturbation du calcul en cours d'exécution, en raison de la récupération de la panne survenue, est alors bien minimisée, et le temps d'arrêt de l'exécution de ce calcul en cours bien réduit.

De préférence, lors de l'étape de relance : la relance du noeud considéré, si celui-ci n'est pas défaillant et si celui-ci n'appartient pas à la même lame de calcul qu'un noeud défaillant, est réalisée à partir de la sauvegarde locale de l'état de ce noeud considéré, la relance d'un noeud opérationnel différent du noeud considéré, si le noeud considéré est défaillant, est réalisée à partir de la récupération de la sauvegarde locale de l'état de ce noeud considéré par ledit noeud opérationnel, récupération réalisée par l'intermédiaire d'un noeud intermédiaire qui est situé sur la même lame de calcul que ce noeud considéré, qui est distinct de ce noeud considéré, et qui est distinct du noeud opérationnel, de préférence, la relance d'un noeud opérationnel différent du noeud considéré, si le noeud considéré appartient à une même lame de calcul qu'un noeud défaillant, est réalisée à partir de la récupération de la sauvegarde locale de l'état de ce noeud considéré par ledit noeud opérationnel.

Ainsi, la récupération de la sauvegarde locale du noeud défaillant est réalisée de manière plus simple et plus rapide, le noeud récupérateur étant très proche du noeud défaillant.

De préférence, toutes les étapes de relance de noeuds sont synchronisées entre elles, de manière à relancer tous lesdits noeuds dans un même état de calcul.

Ainsi, une complète cohérence du reste du calcul, effectué après la relance, est assurée.

De préférence, toutes ces étapes sont réalisées pour tous les noeuds du réseau effectuant un même calcul.

Ainsi, le bénéfice du procédé de gestion de panne proposé par l'invention, est généralisé en étant étendu à l'ensemble des noeuds du réseau effectuant un même calcul.

De préférence, ladite redirection dudit lien entre le noeud considéré et son support de stockage de manière à relier ledit support de stockage vers ledit noeud opérationnel, est réalisée par un changement d'aiguillage dans un commutateur reliant plusieurs noeuds à leurs supports de stockage.

Ainsi, cette redirection est effectuée par une opération simple réalisée au niveau d'un élément de réseau qui est fiable et maîtrisé.

De préférence, l'étape de récupération change le rattachement du support de stockage de la sauvegarde locale de l'état du noeud défaillant en passant par l'intermédiaire d'un commutateur auquel était rattaché le noeud défaillant et son support de stockage de la sauvegarde locale de l'état du noeud défaillant, mais sans passer par le noeud défaillant lui-même.

Ainsi, la redirection peut être effectuée même en cas de panne physique complète du noeud défaillant.

De préférence, le changement de rattachement est réalisé par l'envoi d'une commande au commutateur, cette commande passant par l'un des noeuds rattachés au commutateur par un port de management.

Ainsi, c'est le port de management ou de gestion qui est affecté à la récupération des supports de stockage des noeuds défaillants rattachés à un même commutateur.

De préférence, ce commutateur est un commutateur PCIe (« Peripheral Component Interconnect express » en langue anglaise).

Ainsi, ce commutateur est particulièrement avantageux car il est particulièrement adapté à pouvoir faire communiquer entre eux des périphériques sans devoir passer par l'intermédiaire d'un microprocesseur, donc en pouvant contourner un noeud de calcul défaillant par exemple.

L'utilisation de ce commutateur PCIe permet de rattacher le support de stockage, par exemple un disque de stockage, contenant les sauvegardes locales du noeud de calcul en panne à un autre noeud de calcul. Cette opération est rapide et ne nécessite pas de copie systématique des données de sauvegarde locales, et en particulier pas pour les noeuds de calcul non défaillants.

De préférence, 3 à 10 noeuds sont rattachés à un même commutateur.

Ainsi, le commutateur peut gérer facilement ce petit groupe de noeuds en cas de défaillance d'un noeud de ce petit groupe.

De préférence, le procédé de gestion de panne comprend aussi, pour tout ou partie des noeuds du réseau effectuant un même calcul, même si aucun noeud considéré n'est défaillant, une étape de sauvegarde globale de l'ensemble de ces noeuds, réalisée moins souvent que l'ensemble des étapes de sauvegarde locales de ces noeuds.

Ainsi, avec d'une part la sauvegarde locale-intermédiaire proposée par l'invention pour gérer la grande majorité des pannes de manière simple et efficace, et d'autre part la sauvegarde globale plus complexe et plus coûteuse mais réservée à une minorité de pannes sévères, un excellent compromis entre complexité globale et efficacité globale du procédé de gestion de panne proposé par l'invention est réalisé.

Dans le cadre d'une application tolérante aux pannes, en utilisant plusieurs niveaux de sauvegarde, comme ici une sauvegarde locale rapide et une sauvegarde globale distante plus complexe et plus coûteuse, le procédé de gestion de panne proposé par l'invention permet alors de redémarrer l'application, suite à une panne physique sur un noeud, même complète, et ceci dans la plupart des cas, en repartant de toutes les sauvegardes locales, plus récentes et moins coûteuses, au lieu de devoir repartir des sauvegardes distantes qui sont très souvent nettement plus anciennes, quelques cas plus rares de panne nécessitant parfois l'utilisation de la sauvegarde globale distante. La possibilité de récupérer les données locales du noeud de calcul en panne permet de redémarrer dans la plupart des cas l'application à partir des sauvegardes locales les plus récentes.

De préférence, pour tout ou partie des noeuds du réseau effectuant un même calcul, les supports de stockage sont des mémoires flash.

Ainsi, les mémoires utilisées sont simples, rapides et permanentes.

De préférence, ces mémoires flash sont des mémoires NVMe (« Non Volatile Memory express » en langue anglaise).

Ainsi, les mémoires utilisées sont particulièrement bien adaptées pour communiquer avec un commutateur PCIe (« Peripheral Component Interconnect express » en langue anglaise).

Préférentiellement, le réseau de noeuds de calcul comprend au moins 1000 noeuds de calcul, avantageusement au moins 5000 noeuds de calcul, encore plus avantageusement au moins 10000 noeuds de calcul, rendant d'autant plus intéressant le procédé de gestion de panne selon l'invention car la perte complète d'un calcul en cours devient alors d'autant plus critique que le réseau est grand.

Le principe de tolérance aux pannes est d'autant plus important qu'une application s'exécute sur un cluster qui est constitué d'un plus grand nombre de noeuds de calcul. Plus le nombre de processeurs, mémoires et autres périphériques, est important, plus la probabilité qu'une panne survienne avant la fin de l'exécution est grande. Les applications qui ont pour but de s'exécuter sur ce type de plateforme vont utiliser des librairies de tolérance aux pannes qui leur permettent de sauvegarder (« checkpoint » en langue anglaise) les données nécessaires à un redémarrage (« restart » en langue anglaise) dans un état le plus proche possible de l'état qui existait juste avant la panne. Ainsi, ces applications ne sont pas contraintes de recommencer le calcul depuis le début.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple, d'une partie de réseau incluant un groupe de noeuds et leurs supports de stockage reliés entre eux par un commutateur PCIe, selon un mode de réalisation de l'invention, au niveau de laquelle partie de réseau, un exemple de procédé de gestion de panne selon l'invention peut se dérouler.
La figure 2 représente schématiquement un exemple, de déroulement d'une étape de sauvegarde locale, au cours du procédé de gestion de panne selon un mode de réalisation de l'invention.
La figure 3 représente schématiquement un exemple, de déroulement de la survenue d'une panne, rendant un noeud défaillant, au cours du procédé de gestion de panne selon un mode de réalisation de l'invention.
La figure 4 représente schématiquement un exemple, de déroulement d'une étape de récupération de la sauvegarde locale d'un noeud défaillant, au cours du procédé de gestion de panne selon un mode de réalisation de l'invention.
La figure 5 représente schématiquement un exemple, de déroulement d'une étape de duplication, des sauvegardes locales de l'ensemble des noeuds de calcul d'une lame de calcul dans laquelle un noeud ou au moins un noeud est défaillant, au niveau des noeuds d'une autre lame de calcul rajoutée pour l'occasion, au cours du procédé de gestion de panne selon un mode de réalisation de l'invention.

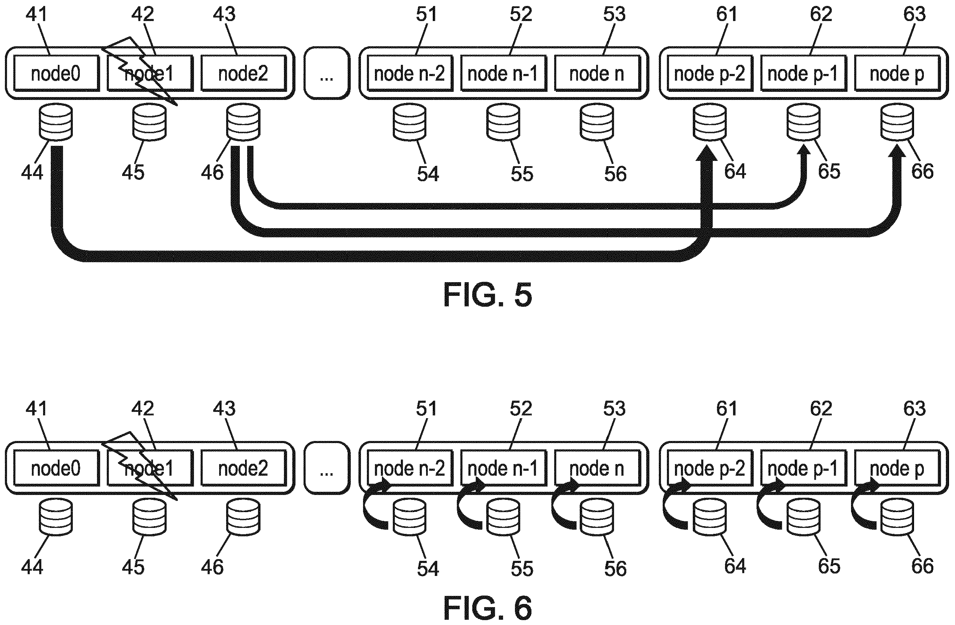

La figure 6 représente schématiquement un exemple, de déroulement d'une étape de relance du calcul, à partir de leurs propres sauvegardes locales pour tous les lames de calcul sans noeud de calcul défaillant, et pour les nouvelles lames de calcul ajoutées à partir de la duplication des sauvegardes des noeuds des lames de calcul présentant au moins un noeud défaillant, le calcul étant relancé au cours de la même tâche que celle pendant laquelle la panne entraînant défaillance d'au moins un noeud de calcul est arrivée, au cours du procédé de gestion de panne selon un mode de réalisation de l'invention.

### DESCRIPTION DETAILLEE DE L'INVENTION

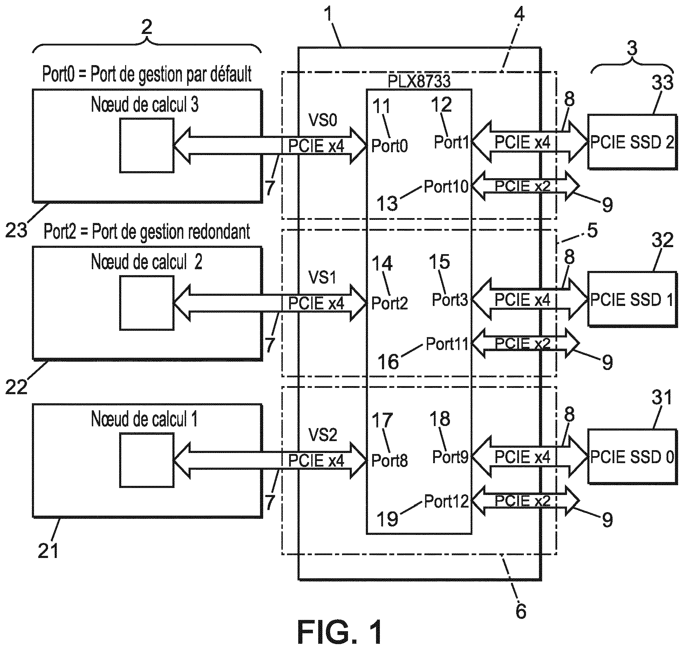

La figure 1 représente schématiquement un exemple, d'une partie de réseau incluant un groupe de noeuds et leurs supports de stockage reliés entre eux par un commutateur PCIe, selon un mode de réalisation de l'invention, au niveau de laquelle partie de réseau, un exemple de procédé de gestion de panne selon l'invention peut se dérouler.

Cette partie de réseau comprend plusieurs noeuds de calcul 2, trois noeuds de calcul 21, 22 et 23, dans l'exemple de la figure 1, ainsi que plusieurs supports de stockage 3, trois supports de stockage 31, 32 et 33, dans l'exemple de la figure 1.

Ces noeuds de calcul 2 et leurs supports de stockage 3 forment un groupe de noeuds de calcul géré par un commutateur PCIe 1 reliant ces noeuds de calcul 2 à leurs supports de stockage 3 respectifs, par l'intermédiaire de connexions bidirectionnelles PCIe 7, 8 ou 9. Ces connexions PCIe 7, 8 ou 9, peuvent être des connexions PCIe à plusieurs voies. La connexion 7 est une connexion à 4 voies. La connexion 8 est une connexion à 4 voies. La connexion 9 est une connexion à 2 voies, ici non encore utilisée, chaque connexion 9 étant d'un côté rattachée à l'un des ports 13, 16 ou 19 et restant libre de l'autre côté. Chaque connexion PCIe 7 relie respectivement l'un des noeuds de calcul 21 à 23 à l'un des ports 0, 2 ou 8 (numérotation du commutateur électronique PLX 8733, mais un autre Switch PCIe peut être utilisé), respectivement référencés 11, 14 ou 17 sur la figure 1, du commutateur 1. Chaque connexion PCIe 8 relie respectivement l'un des supports de stockage 31 à 33 à l'un des ports 1, 3 ou 9, respectivement référencés 12, 15 ou 18 sur la figure 1, du commutateur 1. La connexion 7, les ports 0 et 1, respectivement référencés 11 et 12 sur la figure 1, du commutateur 1, la connexion 8 forment ensemble un lien 4 reliant le noeud de calcul 23 à son support 33. La connexion 7, les ports 2 et 3, respectivement référencés 14 et 15 sur la figure 1, du commutateur 1, la connexion 8 forment ensemble un lien 5 reliant le noeud de calcul 22 à son support 32. La connexion 7, les ports 8 et 9, respectivement référencés 17 et 18 sur la figure 1, du commutateur 1, la connexion 8 forment ensemble un lien 6 reliant le noeud de calcul 21 à son support 31. Les connexions PCIe 7, 8 ou 9, peuvent être regroupées sur un bus PCIe.

Le noeud de calcul 23 est rattaché au port de gestion ou de management par défaut, c'est-à-dire que c'est par lui que transitent les envois vers l'extérieur du groupe de noeuds de calcul 2 et les réceptions en provenance de l'extérieur du groupe de noeuds de calcul 2. En cas de défaillance de ce noeud de calcul 23, celui-ci est remplacé par le noeud de calcul 22 qui est rattaché au port de gestion ou de management redondant, lequel noeud de calcul 22 devient alors rattaché au nouveau port de gestion ou de management effectif.

Lorsqu'un noeud de calcul tombe en panne physique, par exemple le noeud de calcul 21 ou le noeud de calcul 22, considérons ici le noeud de calcul 21, la dernière sauvegarde locale récente de son état de calcul est stockée sur son support de stockage 31.

Dans un système selon l'art antérieur, le support de stockage 31 n'étant accessible que par son noeud de calcul 21 et celui-ci étant en panne physique complète, cette sauvegarde locale récente deviendrait inaccessible, et il faudrait alors recourir à d'autres niveaux de sauvegarde plus complexes et moins récents, d'où une perte importante d'efficacité globale pour le réseau informatique.

Dans le système selon un mode de réalisation de l'invention, présenté à la figure 1, le rattachement du support de stockage 31 est reconfiguré, c'est-à-dire que le support de stockage 31 va cesser d'être relié à son noeud de calcul 21 de rattachement par défaut, mais va devenir relié au noeud de calcul 23, lequel étant rattaché au port de gestion par défaut, va pouvoir faire remonter la sauvegarde locale de l'état de calcul du noeud de calcul 21 défaillant, depuis le support de stockage 31, vers un autre noeud de calcul de rechange extérieur au groupe de noeuds de calcul 21 à 23, cet autre noeud de calcul reprenant alors à son compte la tâche de calcul interrompue au niveau du noeud de calcul 21 défaillant, à partir de la sauvegarde locale de l'état de calcul du noeud de calcul 21 remontée depuis le support de stockage 31, au cours de la même tâche que la tâche pendant laquelle est survenue la panne ayant provoqué la défaillance d'au moins un noeud de calcul.

Dans le commutateur 1, le port 9 (numérotation du commutateur électronique PLX8733, mais un autre Switch PCIe peut être utilisé) référencé 18 (sur la figure 1), au lieu de rester relié en permanence au port 8 référencé 17 comme avant la défaillance du noeud de calcul 21, va être, au moins temporairement relié au port 0 référencé 11, afin de permettre au noeud de calcul 23 de venir lire, dans le support de stockage 31, les données sauvegardées représentatives de l'état de calcul du noeud de calcul 21, juste avant ou peu de temps avant, sa défaillance. Ainsi, la sauvegarde locale, dans le support de stockage 31, de l'état de calcul du noeud de calcul 21 avant sa défaillance, va pouvoir remonter jusqu'au noeud de calcul 23 et être ainsi exploitée pour relancer le calcul avec un très bon compromis entre simplicité de la sauvegarde et efficacité de la relance.

Si c'est le noeud 23 qui devient défaillant, il est d'abord remplacé par le noeud de calcul 22 comme rattaché au port de management, et le noeud de calcul 22, comme rattaché au nouveau port de management, réalise les opérations auparavant réalisées par le noeud de calcul 23 si celui-ci n'était pas devenu défaillant.

La gestion du commutateur 1 est maintenant décrite par un scenario manuel clarifiant et expliquant les différentes opérations à effectuer, comme par exemple la migration du support de stockage 31 d'un noeud de calcul défaillant 21 à un noeud de calcul de rechange 23, le transfert des données, le redémarrage de l'application. La gestion des données côté applicatif est réalisée par la librairie FTI.

L'application exécutée est fournie dans les exemples de la librairie FTI : hdf.exe. Cette application est lancée sur deux noeuds de calcul. Elle va réaliser des sauvegardes locales, sur les disques de stockage NVMe reliés à ces noeuds de calcul par le commutateur PCIe à intervalles réguliers ainsi qu'une sauvegarde globale sur un serveur NFS (« Network File System » en langue anglaise) de façon moins fréquente. Une fois l'application lancée, une panne est générée sur un des deux noeuds de calcul. La migration du disque de stockage NVMe du noeud défaillant vers un autre noeud va alors permettre le transfert des données de la dernière sauvegarde locale de ce noeud défaillant vers un autre noeud. Une fois ce transfert réalisé, l'application peut être relancée et reprend le calcul à la dernière sauvegarde locale des deux noeuds de calcul au lieu de la dernière sauvegarde globale plus ancienne de la partie de réseau.

Dans ce contexte, une reprise sur panne est réalisée avec les données locales de sauvegarde d'une application MPI (« Message Passing Interface » en langue anglaise) d'un noeud de calcul tombant en panne. Les données sont récupérées grâce à la migration du support de stockage du noeud de calcul défaillant sur un noeud de calcul voisin de la même lame de calcul. Ces données sont ensuite transmises à un second noeud opérationnel qui reprendra le calcul. L'intérêt de cette reprise sur panne est qu'elle permet à l'application de redémarrer à partir des sauvegardes locales de tous les noeuds de calcul. Ces sauvegardes locales moins coûteuses sont également plus récentes la plupart du temps, et ne sont au pire qu'aussi récentes, que les sauvegardes globales. De plus, la quantité de données transférées afin de reprendre le calcul va être plus faible que dans le cas d'un redémarrage à partir d'une sauvegarde globale.

Dans le développement qui suit, les parties de texte dans un encadré ou bien entre crochets concernent des lignes de code informatique.

La librairie FTI (« Fault Tolerance Interface » en langue anglaise pour interface de tolérance de panne) va utiliser en particulier quatre fonctions principales existantes et quatre fonctions complémentaires existantes.

Les quatre fonctions principales sont « FTI_Init », « FTI_Finalize », « FTI_protect », « FTI-Snapshot » ; plus précisément :

| |
|---|
| ```
int FTI_Init (char* configFile, MPI_Comm globalComm)
``` |

« FTI_Init » lit un fichier de configurations « configFile », crée des répertoires de points de contrôle, détecte la topologie du système, initialise le communicateur FTI en utilisant « globalComm » et régénère les données après récupération. Cette fonction renvoie « FTI_SCES » en cas de succès ou bien « FTI_NSCS » en cas d'échec. Cette fonction devrait être appelée avant les autres fonctions FTI, juste après l'initialisation MPI (« Message Passing Interface » en langue anglaise pour interface de passage de message).

| |
|---|
| ```
int FTI_Finalize()
``` |

"FTI_Finalize" libère la mémoire allouée, transmet la fin de l'exécution à un processus dédié et nettoie les points de contrôle et les métadonnées. Cette fonction renvoie "FTI_SCES" pour un processus d'application ou bien « exit(0) » pour un processus de tête. Cette fonction devrait être appelée avant "MPI_Finalize()".

| |
|---|
| ```
int FTI_Protect (int id, void* ptr, long count, FTIT_type type)
``` |

"FTI_Protect" stocke les métadonnées concernant la variable à protéger. Chaque variable protégée est identifiée par "id". Son adresse "ptr", le comptage de nombre et le type d'élément pour sauvegarder cette variable peuvent être changés durant l'exécution.

| |
|---|
| ```
int FTI_Snapshot()
``` |

"FTI_Snapshot" charge les données de point de contrôle et initialise les variables d'exécution après récupération et écrit les points de contrôle multiniveaux en fonction de leur fréquences requises.

Les quatre fonctions complémentaires sont « FTI_Checkpoint », « FTI_recover », « FTI_InitType », « FTI_Status ».

La fonction « FTI_Snapshot() » peut être remplacée par la fonction « FTI_Checkpoint » et par la fonction « FTI_Recover ».

Plus précisément :

| |
|---|
| ```
int FTI_Checkpoint (int id, int level)
``` |

"FTI_Checkpoint" écrit les valeurs de la variable d'exécution protégée "id" dans un fichier de point de contrôle de niveau requis.

| |
|---|
| ```
int FTI_Recover()
``` |

"FTI_Recover" charge les données de point de contrôle à partir du fichier de point de contrôle et initialise les variables d'exécution.

| |
|---|
| ```
int FTI_InitType(FTIT_type* type, int size)
``` |

"FTI_InitType" initialise un nouveau type de données appelé "type" et sa taille est une taille en bytes.

| |
|---|
| ```
int FTI_Status()
``` |

"FTI_Status" renvoie l'état courant du drapeau de récupération. Cet état peut être "0" si aucun point de contrôle n'a encore été réalisé ou récupéré avec succès, "1" si au moins un point de contrôle a été réalisé ou « 2 » si l'exécution a été relancée à partir d'un point de contrôle de niveau L4 et si « keep_last_checkpoint » a été activé pendant la dernière exécution.

Pour proposer un processus résilient aux pannes qui utilise le matériel et le logiciel tolérant aux pannes décrit dans la présente demande de brevet, il est intéressant de développer certaines améliorations dans le « SLURM » ("Simple Linux Utility for Resource Management" en langue anglaise pour utilitaire Linux simple pour gestion de ressources), en particulier l'option « checkpoint-restart », et les variables « SLURM_JOB_NODES_DOWN » et « SLURM_RESTART_COUNT ».

L'option "checkpoint-restart" est ajoutée pour la fonction "sbatch". Si elle est installée, un drapeau dans l'enregistrement de la tâche est installé pour informer le contrôleur SLURM d'allouer des noeuds sur la base de la disposition des commutateurs PCIe définis dans le fichier "switch.conf file". Ce fichier peut être généré grâce à un générateur de script présenté dans l'Annexe 1 disposé en fin de description. Un exemple d'une telle réalisation de ce fichier est maintenant présenté ici :

| |
|---|
| ```
 Priority=10
 Root=Cluster
 #Root level Layout configuration
 Entity=Cluster Type=Center Enclosed=pci[0-1]
 #Switch level Layout configuration
 Entity=pci0 Type=Switch NodeList=trek[0-1,4]
 Enclosed=trek[0-1,4]
 Entity=pci1 Type=Switch NodeList=trek[5-7]
 Enclosed=trek[5-7]
 #Node level Layout configuration
 Entity=trek0 Type=Node Role=Manager PCISwitch=pci0
 Entity=trek1 Type=Node Role=Backup PCISwitch=pci0
 Entity=trek4 Type=Node Role=Other PCISwitch=pci0
 Entity=trek5 Type=Node Role=Manager PCISwitch=pcil
 Entity=trek6 Type=Node Role=Other PCISwitch=pcil
 Entity=trek7 Type=Node Role=Backup PCISwitch=pcil
``` |

"sbatch" reconnaît cette option de nouvelle ligne de commande et installe un drapeau interne "opt.ckpt_restart=1". Cette option peut aussi être fournie à « sbatch », via la variable d'environnement d'entrée « SBATCH_CHECKPOINT_RESTART ». Cette option est copiée dans la structure "job_desc_msg_t" laquelle va ensuite être copiée dans la structure "job_record » dans le contrôleur. Dans le contrôleur, elle peut être référencée via "job_ptr->ckpt_restart". Certaines variables d'environnement qui sont ajoutées aux environnements de prologue et d'épilogue (« prolog/epilog environments » en langue anglaise) seront seulement installées lorsque le drapeau de la ligne de commande « *--checkpoint-restart »* est installé.

Une nouvelle variable "SLURM_JOB_NODES_DOWN" est ajoutée. Elle contient une liste de noeuds alloués qui sont devenus défaillants pendant l'exécution de la tâche. Par défaut, seulement le premier noeud qui devient défaillant sera listé. Si l'option "--no-kill (-k)" est spécifiée, alors tous les noeuds qui sont devenus défaillants sont listés. Elle est installée par le contrôleur dans le processus qui supprime les tâches. Chaque noeud peut y accéder.

La variable "SLURM_RESTART_COUNT" est modifiée pour être propagée comme une variable d'environnement pour tous les épilogues SLURM. La structure "job_ptr->restart_cnt" ne va être incrémentée par que les tâches « SBATCH ».

Ces deux variables d'environnement et leurs valeurs vont passer du contrôleur aux noeuds de calcul via un message "RPC" (« Remote Procedure Call » en langue anglaise pour appel de procédure lointain) qui va les extraire pour les transférer dans une structure locale « job_env » laquelle est utilisée pour installer les variables d'environnement dans les environnements de prologue et d'épilogue.

Le déroulement de procédé de gestion de panne qui suit est écrit dans un état logiciel et matériel correspondant à la table suivante:

| | |
|---|---|
| TS Version | 18.1 |
| BMC | 43.26.00.151 |
| BIOS | BIOS_KNL020.29.01.002 |
| FPGA | 3.9.15.DBG0 |
| Ethernet | 1.63 |
| CWP CPLD | 4.1 |
| Libbpsm | 0.1 |
| FTI library | 0.9.8 |
| OpenMPI | 2.0.2.4 |
| Slurm | 17.11.0-0pre1 |

Dans une première étape, l'utilisateur va coder au moins les fonctions "FTI_Init", "FTI_Protect", "FTI_Snapshot" et "FTI_Finalize". Puis, il va remplacer "MPI_COMM_WORLD » par "FTI_COMM_WORLD », et adapter les paramètres dans le fichier de configuration FTI. Ensuite, l'utilisateur peut utiliser le script « sbatch » classique avec une option additionnelle "#SBATCH --checkpoint-restart".

Dans une deuxième étape, SLURM alloue à la tâche, autant que possible, trois noeuds par lame ou bien au moins les noeuds gestionnaire et gestionnaire remplaçant du commutateur PCIe.

Dans une troisième étape, pendant le prologue SLURM, la configuration du commutateur et le point de montage sont vérifiés. "SLURM_RESTART_COUNT est initialisé.

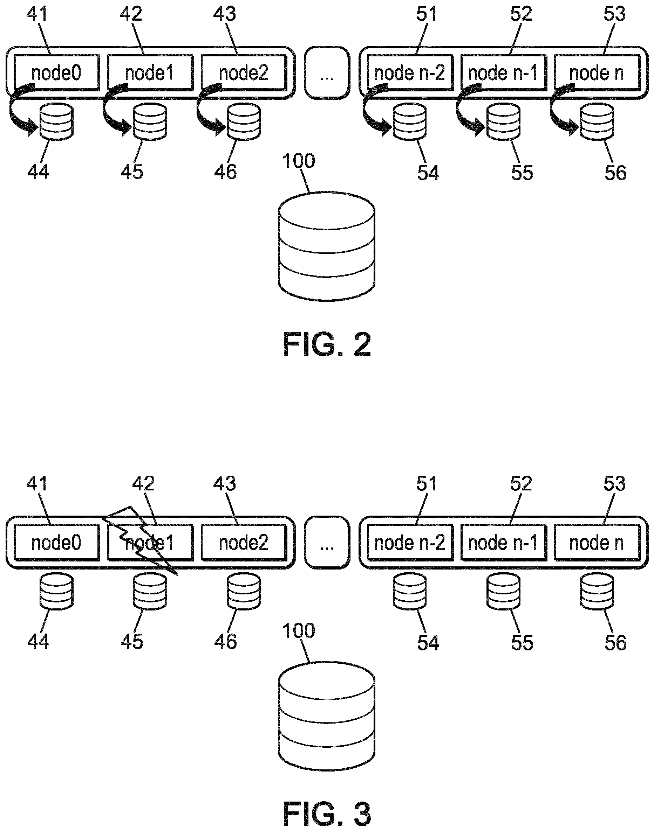

La figure 2 représente schématiquement un exemple, de déroulement d'une étape de sauvegarde locale, au cours du procédé de gestion de panne selon un mode de réalisation de l'invention.

Dans une quatrième étape, SLURM lance les rangs MPI. FTI écrit les fichiers de point de contrôle avec une fréquence choisie par l'utilisateur.

Des noeuds 41 à 43 sont respectivement associés à des supports de stockage 44 à 46. Les noeuds 41 à 43 appartiennent à une même lame de calcul. Des noeuds 51 à 53 sont respectivement associés à des supports de stockage 54 à 56. Les noeuds 51 à 53 appartiennent à une même lame de calcul différente de celle des noeuds 41 à 43. Les supports de stockage 44 à 46 et 54 à 56 assurent la sauvegarde locale de l'état de leurs noeuds associés respectifs 41 à 43 et 51 à 53, tandis qu'un système de fichiers parallèle 100 assure la sauvegarde globale de l'état des noeuds du réseau ou au moins d'une partie du réseau. Le système de fichiers parallèle 100 est un système de fichiers réseau.

De manière périodique, avantageusement selon une durée comprise entre 1 et 20 minutes, plus avantageusement selon une durée comprise entre 2 et 10 minutes, par exemple toutes les 2, 5 ou 10 minutes, les supports de stockage 44 à 46 et 54 à 56 assurent la sauvegarde locale de l'état de leurs noeuds associés respectifs 41 à 43 et 51 à 53.

La figure 3 représente schématiquement un exemple, de déroulement de la survenue d'une panne, rendant un noeud défaillant, au cours du procédé de gestion de panne selon un mode de réalisation de l'invention.

Dans une cinquième étape, SLURM détecte la défaillance d'un noeud et lance l'épilogue qui contient la mise à jour de « SLURM_JOB_DOWN_NODELIST » avec la liste des noeuds défaillants, la mise à jour de « SLURM_RESTART_COUNT », et le système de récupération.

Un noeud, par exemple le noeud 42 subit une défaillance (symbolisée par un petit éclair sur la figure 3). Les autres noeuds 41 et 43 de cette même lame de calcul ne sont pas défaillants. Les noeuds 51 à 53 de l'autre lame de calcul ne sont pas non plus défaillants.

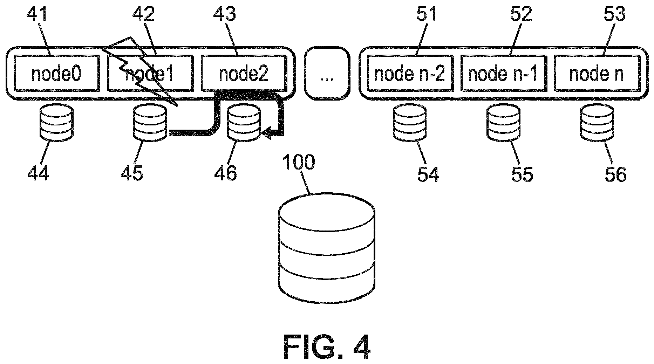

Le système de récupération lancé pendant l'épilogue est séparé en deux parties, respectivement décrites au niveau des figures 4 et 5, au cours des première et deuxième parties d'une sixième étape.

La figure 4 représente schématiquement un exemple, de déroulement d'une étape de récupération de la sauvegarde locale d'un noeud défaillant, au cours du procédé de gestion de panne selon un mode de réalisation de l'invention.

Dans la première partie de la sixième étape du système de récupération, la configuration du commutateur PCIe est modifiée et les fichiers de point de contrôle sont récupérés.

La sauvegarde locale de l'état du noeud défaillant 42, effectuée sur le support de stockage 45, est dupliquée sur le support de stockage 46 du noeud 43 non défaillant, via le commutateur PCIE de la lame de calcul et via le noeud non défaillant 43.

La figure 5 représente schématiquement un exemple, de déroulement d'une étape de duplication, des sauvegardes locales de l'ensemble des noeuds de calcul d'une lame de calcul dans laquelle un noeud ou au moins un noeud est défaillant, au niveau des noeuds d'une autre lame de calcul rajoutée pour l'occasion, au cours du procédé de gestion de panne selon un mode de réalisation de l'invention.

Dans la deuxième partie de la sixième étape du système de récupération, en cas de panne, tous les fichiers des points de contrôle sont conservés localement, sauf pour les fichiers de point de contrôle du noeud défaillant ou de tous les noeuds appartenant à une lame de calcul ayant au moins un noeud défaillant. Par mesure de précaution, pour éviter une deuxième défaillance dans une lame de calcul ayant subi une première défaillance, ce qui rendrait cette deuxième défaillance plus délicate à gérer, les sauvegardes de tous les noeuds d'une lame de calcul ayant eu (au moins) un noeud défaillant, sont dupliquées au niveau des supports de stockage associés aux noeuds de calcul d'une autre lame de calcul rajoutée pour l'occasion.

Le support de stockage 44 transmet la sauvegarde locale du noeud non défaillant 41 au support de stockage 64 du noeud 61 d'une autre lame de calcul rajoutée pour l'occasion. Les sauvegardes locales des noeuds non défaillants 51 à 53 sont conservées localement, sans être dupliquées, et seront récupérées par leurs propres noeuds non défaillants 51 à 53 pour relancer le calcul à partir de l'état sauvegardé de calcul en cours, au cours de la même tâche que la tâche en cours ayant subi la panne. Le support de stockage 46 transmet, aux supports de stockage 65 et 66 associés aux noeuds 62 et 63 de la même lame de calcul rajoutée et contenant déjà le noeud 61, non seulement la sauvegarde locale de l'état de son noeud associé non défaillant 43, mais aussi la duplication de la sauvegarde locale de l'état du noeud défaillant 42. Ainsi, l'un des supports 65 et 66 va récupérer la duplication de la sauvegarde du noeud défaillant 42 et l'autre celle du noeud non défaillant 43. Toutes les sauvegardes locales sur les supports 41 à 43 et 51 à 53 et 61 à 63, de l'état des noeuds 41 à 43 et 51 à 53 et 61 à 63, respectivement stockés sur les supports 44 et 46 et 54 à 56 et 64 à 66, sont cohérentes entre elles et correspondent à un même état de calcul à partir duquel ce même calcul pourra être ultérieurement relancé au cours de la même tâche que la tâche en cours ayant subi la panne.

La figure 6 représente schématiquement un exemple, de déroulement d'une étape de relance du calcul, à partir de leurs propres sauvegardes locales pour tous les lames de calcul sans noeud de calcul défaillant, et pour les nouvelles lames de calcul ajoutées à partir de la duplication des sauvegardes des noeuds des lames de calcul présentant au moins un noeud défaillant, le calcul étant relancé au cours de la même tâche que celle pendant laquelle la panne entraînant défaillance d'au moins un noeud de calcul est arrivée, au cours du procédé de gestion de panne selon un mode de réalisation de l'invention.

Dans une septième étape, au cours de la même tâche que la tâche en cours ayant subi la panne, le calcul peut être relancé à partir de son dernier état sauvegardé, pour les noeuds non défaillants simplement à partir de leurs propres sauvegardes locales non dupliquées, et pour les noeuds appartenant à une lame de calcul ayant eu un noeud défaillant, à partir des duplications des sauvegardes locales des noeuds de cette lame de calcul à noeud défaillant, duplications réalisés sur les noeuds d'une nouvelle lame de calcul non encore utilisée dans le calcul et rajoutée pour l'occasion à ce calcul, c'est-à-dire rajoutée à l'occasion de la panne survenue.

Les noeuds 51 à 53 non défaillants relancent le calcul à partir de leurs propres sauvegardes stockées sur leurs propres supports de stockage 54 à 56. Les noeuds 41 à 43 ne relancent pas le calcul, ils en sont exclus. Les noeuds 61 à 63 de la nouvelle lame de calcul rajoutée pour l'occasion, relancent le calcul à partir des duplications des sauvegardes des noeuds 41 à 43 de la lame de calcul à noeud défaillant, ces duplications étant stockées sur leurs propres supports de stockage 64 à 66.

Bien entendu, la présente invention n'est pas limitée aux exemples et au mode de réalisation décrits et représentés, mais elle est susceptible de nombreuses variantes accessibles à l'homme de l'art.

### ANNEX 1 : Listing informatique utilisé dans le déroulement du procédé de gestion de panne précédemment décrit.

**Pour la partie "disposition / génération configuration commutateur" ("Layout.d/switch.conf generator")**

| |
|---|
| ```
 linestart="Priority=10\nRoot=Cluster\n\n#Root level
 Layout configuration\nEntity=Cluster Type=Center
 Enclosed="
 linepci="\n\n#Switch level Layout configuration"
 linenode="\n\n#Node level Layout configuration"
 while true; do
     first='nodeset -e $nodes \| awk '{print $1;}''
     bmc=bmc${first##[a-z]*[a-z]}
     radical='echo $first \| sed -e 's/[0-9]*$//''
     unset pci
     for line in '$ssh pmsmModel.py display -n $bmc
     --neighbour --csv --column NAME LOCATION --no-
     header'; do
           if [[$line = "Error"]]; then
                  echo "error: $first and its bmc $bmc
                  not found by pmsmModel.py"
                         exit 3
            fi
           location='echo $line \| cut -d "," -f2'
           name='echo $line \| cut -d "," -f1'
           current=$radical'echo $name \| sed -e
           "s/.*\[bmc//g"\| sed -e "s/\]//g"'
           end=${location: -2}
           begin=${location::-2}
           if ['nodeset -c $nodes -i $current' = 0
           ]; then
                  continue
            fi
           if [[! -v pci]]; then
                 pci=$begin
                  liste=$current
           else
                  if ["$pci" = "$begin"]; then
                        liste="$liste,$current"
                  else
                        echo "error: $pci and $begin
                        set in same neighbourhood for $bmc"
                        exit 3
``` |
| ```
                  fi
            fi
                   if [[$end = "Rp"]]; then
                             role="Manager"
                   elif [[$end = "Mp"]]; then
                             role="Backup"
                   elif [[$end = "Lp"]]; then
                             role="Other"
                   else
                   echo "error: $current has an
                   unknown position on $pci: $end"
                              exit 3
            fi
           linenode="$linenode\nEntity=$current
           Type=Node Role=$role PCISwitch=$pci"
     done
     if ['nodeset -c $liste -i $first' = 0]; then
           echo "error: $first and its bmc $bmc not
           really found in $pci"
                   exit 3
     fi
     if [[! -v listepci]]; then
           listepci=$pci
     else
           listepci="$listepci,$pci"
     fi
     liste='nodeset -f $liste'
         linepci="$linepci\nEntity=$pci Type=Switch
         NodeList=$liste Enclosed=$liste"
     if ['nodeset -c $nodes -x $liste' = 0]; then
           break;
     fi
     nodes='nodeset -f $nodes -x $liste'
     done
     listepci='nodeset -f $listepci'
     total="$linestart$listepci$linepci$linenode"
     if [[-v output]]; then
     echo -e $total > $output
     else
     echo -e $total
     fi
``` |
| ```
     exit 0
``` |

### Exemple of modification pour utiliser la librairie FTI

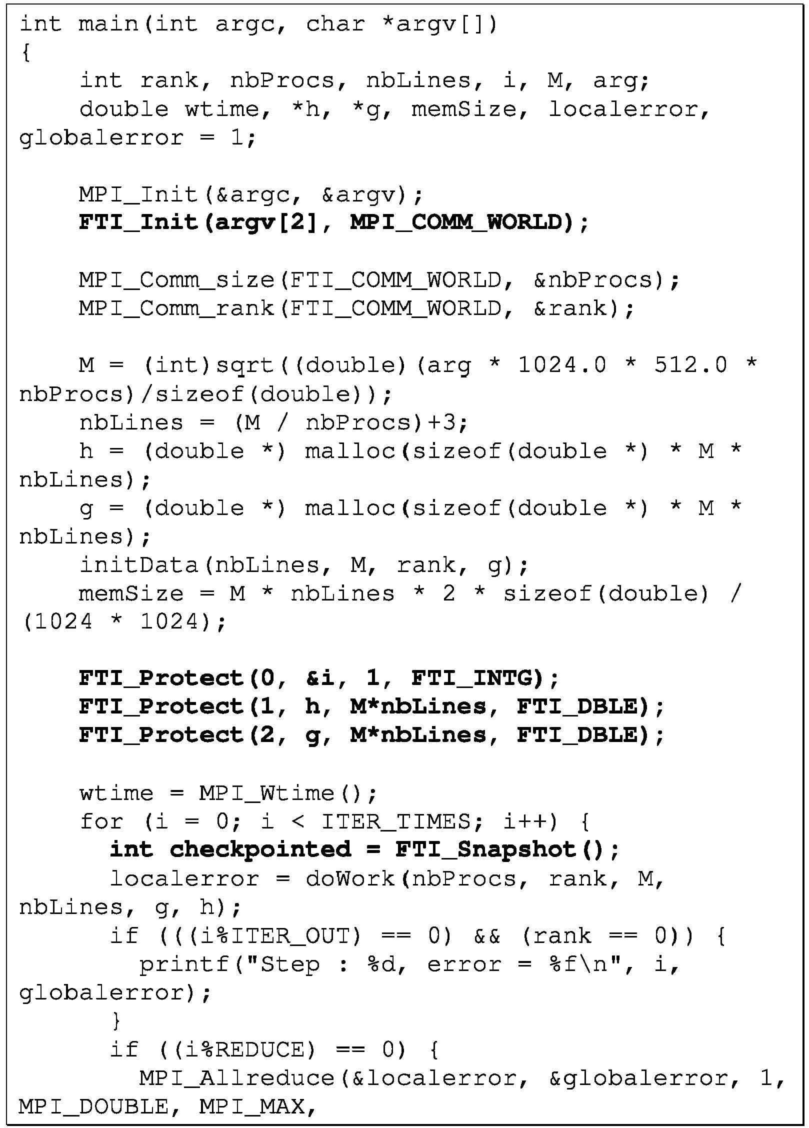

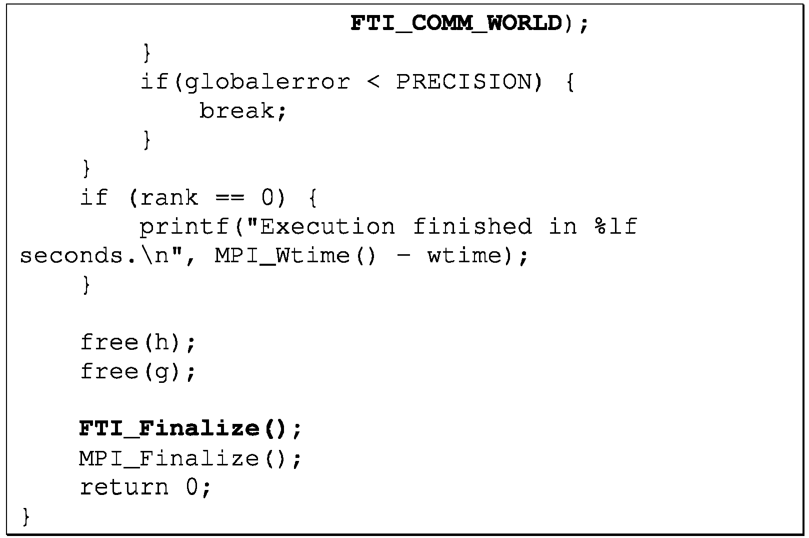

**Pour la partie: "contrôle de detection disque NVMe et point de montage"**

| |
|---|
| ```
#!/usr/bin/bash
 # Copyright (C) Christophe Laferrière 2017 Bull S.
 A. S. - All rights reserved
 # Bull, Rue Jean Jaures, B.P.68, 78340, Les Clayes-
 sous-Bois
 # This is not Free or Open Source software. Please
 contact Bull S. A. S. for
 # details about its license.
 # This script checks that an NVMe disk is mounted
 in a given location
 # Default hardcoded location for mountpoint
 FTI_CKPT_LOCATION="/localckpt"
 # Where is mounted the NVMe disk :
 NVME_MOUNT_LOCATION='mount \| grep nvme \| cut -d ' '
 -f 3'
 # If no NVMe disk is mounted, exit with error code
 :
 [[ -z $NVME_MOUNT_LOCATION ]] && echo "Error: No
 NVMe disk mounted" && exit 1
 # Finally check if NVMe is mounted in the right
 place :
 if [[ $FTI_CKPT_LOCATION == $NVME_MOUNT_LOCATION*
 ]] ;
 then
  exit 0
  else
  echo "Error: NVMe disk is not mounted where it
  should be ($FTI_CKPT_LOCATION vs
  $NVME_MOUNT_LOCATION)"
  exit 1
  fi
``` |

**pour la partie: "récupération de sauvegarde", script exécuté sur la racine du noeud gestionnaire du commutateur PCIe**

| |
|---|
| ```
 #!/bin/bash
 EXECID=$1
 MANAGER=$2 #10050
 CRASHEDNODE=$3 # 2 <=> pluton10049
 #PCIe switch reconfiguration
 bpsm_grab_port 3
 ipmitool -H bmc${MANAGER} raw 0x3a 0xcd
 ${CRASHEDNODE}
 echo 1 > /sys/bus/pci/devices/0000:00:00.0/rescan
 #Checkpoint recovery and flush
 mkdir /localrecovery ; mount /dev/nvme1n1
 /localrecovery
 cp -r /localrecovery/${EXECID} /scratch/globalckpt/
 mv /scratch/globalckpt/${EXECID}/l1
 /scratch/globalckpt/${EXECID}/l4
 cp /localckpt/${EXECID}/l1/*
 /scratch/globalckpt/${EXECID}/l4/
 mv /scratch/meta/${EXECID}/l1
 /scratch/meta/${EXECID}/14
``` |

## Revendications

1. Procédé de gestion de panne dans un réseau de noeuds (21-63), comprenant, pour chaque noeud considéré de tout ou partie des noeuds (21-53) du réseau effectuant un même calcul :
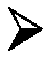 d'abord, une étape de sauvegarde locale de l'état de ce noeud considéré (21-53), au niveau d'un support de stockage (31-56) de ce noeud considéré (21-53), le lien entre ce support de stockage (31-56) et ce noeud considéré (21-53) pouvant être redirigé de ce support de stockage (31-56) vers un autre noeud (21-63),
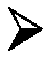 ensuite, si le noeud considéré est défaillant (21, 42), une étape de récupération de la sauvegarde locale de l'état de ce noeud considéré (21, 42), en redirigeant ledit lien entre le noeud considéré (21, 42) et son support de stockage (31, 45) de manière à relier ledit support de stockage (31, 45) vers un noeud opérationnel (23, 43) différent du noeud considéré (21, 42), ce noeud opérationnel (23, 43) étant déjà en train d'effectuer ledit calcul,
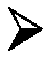 les sauvegardes locales de ces noeuds considérés (21-53), utilisées pour les étapes de récupération, sont cohérentes entre elles de sorte à correspondre à un même état de ce calcul,
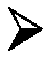 puis, si au moins un noeud considéré est défaillant (21, 42), une étape de renvoi de ladite sauvegarde locale de ce noeud considéré (21, 42) vers un nouveau noeud supplémentaire (61-63) rajouté audit réseau à l'occasion de la défaillance de ce noeud considéré (21,42).

2. Procédé de gestion de panne selon la revendication 1, **caractérisé en ce que**, dans l'étape de renvoi, toutes les sauvegardes locales des noeuds (41-43) d'une même lame de calcul que celle du noeud défaillant (42) sont renvoyées vers une nouvelle lame de calcul (61-63) rajoutée audit réseau à l'occasion de la défaillance du noeud considéré.

3. Procédé de gestion de panne selon la revendication 1 ou 2, **caractérisé en ce qu'**il comprend :
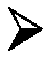 après ladite étape de renvoi, une étape de relance dudit calcul à partir desdites sauvegardes locales, au cours de la même tâche que la tâche au cours de laquelle un noeud est devenu défaillant (21, 42).

4. Procédé de gestion de panne selon la revendication 3, **caractérisé en ce que**, lors de l'étape de relance :
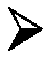 la relance du noeud considéré (51-53), si celui-ci n'est pas défaillant et si celui-ci n'appartient pas à la même lame de calcul qu'un noeud défaillant (42), est réalisée à partir de la sauvegarde locale de l'état de ce noeud considéré (51-53),
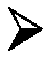 la relance d'un noeud opérationnel différent (62) du noeud considéré (42), si le noeud considéré est défaillant (42), est réalisée à partir de la récupération de la sauvegarde locale de l'état de ce noeud considéré (42) par ledit noeud opérationnel (62), récupération réalisée par l'intermédiaire d'un noeud intermédiaire (43) qui est situé sur la même lame de calcul que ce noeud considéré (42), qui est distinct de ce noeud considéré (42), et qui est distinct du noeud opérationnel (62),
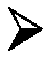 de préférence, la relance d'un noeud opérationnel différent (61-63) du noeud considéré (41, 43), si le noeud considéré (41, 43) appartient à une même lame de calcul qu'un noeud défaillant (42), est réalisée à partir de la récupération de la sauvegarde locale de l'état de ce noeud considéré (41, 43) par ledit noeud opérationnel (61-63).

5. Procédé de gestion de panne selon l'une quelconque des revendications précédentes, **caractérisé en ce que** toutes les étapes de relance de noeuds (21-63) sont synchronisées entre elles, de manière à relancer tous lesdits noeuds (21-63) dans un même état de calcul.

6. Procédé de gestion de panne selon l'une quelconque des revendications précédentes, **caractérisé en ce que** toutes ces étapes sont réalisées pour tous les noeuds (21-63) du réseau effectuant un même calcul.

7. Procédé de gestion de panne selon l'une quelconque des revendications précédentes, **caractérisé en ce que** ladite redirection dudit lien entre le noeud considéré (21-53) et son support de stockage (31-56) de manière à relier ledit support de stockage (31-56) vers ledit noeud opérationnel (21-53), est réalisée par un changement d'aiguillage dans un commutateur (1) reliant plusieurs noeuds (21-53) à leurs supports de stockage (31-56).

8. Procédé de gestion de panne selon l'une quelconque des revendications précédentes, **caractérisé en ce que** l'étape de récupération change le rattachement du support de stockage (31, 45) de la sauvegarde locale de l'état du noeud défaillant (21, 42) en passant par l'intermédiaire d'un commutateur (1) auquel était rattaché le noeud défaillant (21, 42) et son support de stockage (31, 45) de la sauvegarde locale de l'état du noeud défaillant (21, 42), mais sans passer par le noeud défaillant (21, 42) lui-même.

9. Procédé de gestion de panne selon la revendication 8, **caractérisé en ce que** le changement de rattachement est réalisé par l'envoi d'une commande au commutateur (1), cette commande passant par l'un des noeuds (22, 23) rattachés au commutateur (1) par un port de management (11, 14).

10. Procédé de gestion de panne selon l'une quelconque des revendications 7 à 9, **caractérisé en ce que** ce commutateur (1) est un commutateur PCIe.

11. Procédé de gestion de panne selon l'une quelconque des revendications 7 à 10, **caractérisé en ce que** 3 à 10 noeuds (21-63) sont rattachés à un même commutateur.

12. Procédé de gestion de panne selon l'une quelconque des revendications précédentes, **caractérisé en ce qu'**il comprend aussi, pour tout ou partie des noeuds (21-53) du réseau effectuant un même calcul, même si aucun noeud considéré n'est défaillant, une étape de sauvegarde globale de l'ensemble de ces noeuds (21-53), réalisée moins souvent que l'ensemble des étapes de sauvegarde locales de ces noeuds (21-53).

13. Procédé de gestion de panne selon l'une quelconque des revendications précédentes, **caractérisé en ce que**, pour tout ou partie des noeuds (21-53) du réseau effectuant un même calcul, les supports de stockage (31-56) sont des mémoires flash.

14. Procédé de gestion de panne selon la revendication 13, **caractérisé en ce que** ces mémoires flash sont des mémoires NVMe.
